(19) Europäisches Patentamt
European Patent Office
Office européen des brevets

(11) **EP 4 814 047 A1**

(12) **EUROPEAN PATENT APPLICATION**
published in accordance with Art. 153(4) EPC

(43) Date of publication:
**30.09.2026 Bulletin 2026/40**

(21) Application number: **24894186.6**

(22) Date of filing: **20.11.2024**

(51) International Patent Classification (IPC):
***C08J 9/40*** *(2006.01)* ***B32B 5/32*** *(2006.01)*
***C08J 9/00*** *(2006.01)* ***F21S 45/30*** *(2018.01)*
***F21V 31/03*** *(2006.01)* ***F21W 102/00*** *(2018.01)*

(52) Cooperative Patent Classification (CPC):
**B32B 5/32; C08J 9/00; C08J 9/40; F21S 45/30; F21V 31/03;** F21W 2102/00

(86) International application number:
**PCT/JP2024/041195**

(87) International publication number:
**WO 2025/110195 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 JP 2023198592**

(71) Applicant: **Nitto Denko Corporation**
**Ibaraki-shi, Osaka 567-8680 (JP)**

(72) Inventors:
- **HAYASHI, Kahoko**
  **Ibaraki-shi, Osaka 567-8680 (JP)**
- **UEMURA, Kou**
  **Ibaraki-shi, Osaka 567-8680 (JP)**
- **MATSUDA, Takayuki**
  **Ibaraki-shi, Osaka 567-8680 (JP)**

(74) Representative: **Müller-Boré & Partner Patentanwälte PartG mbB**
**Friedenheimer Brücke 21**
**80639 München (DE)**

# (54) VENTILATION FILM, VENTILATION MEMBER, AND LIGHT EMITTING DEVICE

(57) Provided is a gas-permeable membrane which has air permeability in a thickness direction, is colored, and includes a first principal surface, and a second principal surface opposite the first principal surface. The second principal surface has a lightness greater than that of the first principal surface. An absolute value of difference in the lightness between the first principal surface and the second principal surface is 1.5 or more and 76 or less. The second principal surface has the lightness of 20 or more and 95 or less. Luminous transmittance of light transmitted from the first principal surface to the second principal surface is 0.015 or less. The lightness refers to lightness L* of CIE1976 L*,a*,b* color space specified in JIS Z8781-4:2013. The luminous transmittance is represented by a stimulus value Y of CIE tristimulus values specified in JIS Z8781-3:2016. The gas-permeable membrane is suitably used for a light-emitting device such as a lamp.

11
1
12

FIG.2



Processed by Luminess, 75001 PARIS (FR)

## Description

### TECHNICAL FIELD

The present invention relates to a gas-permeable membrane, and a gas-permeable member and a light-emitting device which have the gas-permeable membrane.

### BACKGROUND ART

An opening is normally formed at a housing of an electrical component such as a lamp for a vehicle. By forming the opening, ventilation can be ensured between the inside and the outside of the housing, and thus, for example, pressure variation that may occur inside the housing can be reduced. Patent Literature 1 discloses a technique for fixing a gas-permeable membrane onto an opening of a housing. Patent Literature 1 also indicates that ventilation can be ensured while water or dust is prevented from entering the housing by fixing the gas-permeable membrane, and examples of the gas-permeable membrane include a fluorine resin porous body and a polyolefin porous body.

### CITATION LIST

#### Patent Literature

Patent Literature 1: JP2003-318557A

### SUMMARY OF INVENTION

#### Technical Problem

A fluorine resin porous body and a polyolefin porous body normally have a white color or a color close to white. Meanwhile, enhancement of luminance progresses for lamps for vehicles, according to improvement of light sources or demands for enhancing visibility and design property. A gas-permeable membrane is normally fixed to a surface other than an irradiation surface in a lamp, in other words, fixed at a position which is not visually recognized from outside of a running vehicle. However, according to study made by the inventors of the present invention, it has been found that, in a case where a gas-permeable membrane having a white color or a color close to white is used, light from a light source is likely to be transmitted through the gas-permeable membrane and to leak from a gap between the lamp and a body. It can be considered that the gas-permeable membrane is colored in order to reduce the light leakage. However, overlooking of a gas-permeable membrane fixed to a housing needs to be prevented in an inspection conducted when a lamp or a vehicle is assembled.

An object of the present invention is to provide a colored gas-permeable membrane which is suitably used for a light-emitting device such as a lamp.

#### Solution to Problem

The present invention provides a gas-permeable membrane having air permeability in a thickness direction, colored, and including:

a first principal surface; and
a second principal surface opposite the first principal surface, wherein
the second principal surface has a lightness greater than that of the first principal surface,
an absolute value of difference in the lightness between the first principal surface and the second principal surface is 1.5 or more and 76 or less,
the second principal surface has the lightness of 20 or more and 95 or less, and
luminous transmittance of light transmitted from the first principal surface to the second principal surface is 0.015 or less, wherein
the lightness refers to lightness L* of CIE1976 L*,a*,b* color space specified in JIS Z8781-4:2013, and
the luminous transmittance is represented by a stimulus value Y of CIE tristimulus values specified in JIS Z8781-3:2016.

The present invention according to another aspect provides a gas-permeable member including:

the gas-permeable membrane according to the above-described invention; and
a support member for supporting the gas-permeable membrane.

The present invention according to another aspect provides a light-emitting device including;

a housing having an opening;
a light source housed in the housing; and
a gas-permeable membrane fixed to the housing so as to cover the opening, wherein
the gas-permeable membrane is the gas-permeable membrane according to the above-described invention.

Advantageous Effects of Invention

In the gas-permeable membrane of the present invention, coloring is controlled such that difference in lightness between one of the principal surfaces (first principal surface) and the other of the principal surfaces (second principal surface) is in a predetermined range, and each of the lightness of the second principal surface having a relatively great lightness and luminous transmittance of light transmitted from the first principal surface having a relatively small lightness to the second principal surface is in a predetermined range. The gas-permeable membrane in which the coloring is controlled is suitable for both reduction of the above-described light leakage and prevention of overlooking, and is suitably used for a light-emitting device such as a lamp.

BRIEF DESCRIPTION OF THE DRAWINGS

FIG. 1 is a cross-sectional view schematically showing an example of a gas-permeable membrane of the present invention.
FIG. 2 is a cross-sectional view schematically showing an example of a colored state of the gas-permeable membrane of the present invention.
FIG. 3 is a plan view schematically showing an example of a state of a second principal surface of the gas-permeable membrane of the present invention.
FIG. 4 is a plan view schematically showing an example of a state of the second principal surface of the gas-permeable membrane of the present invention.
FIG. 5 is a plan view schematically showing an example of a state of the second principal surface of the gas-permeable membrane of the present invention.
FIG. 6 is a plan view schematically showing an example of a state of the second principal surface of the gas-permeable membrane of the present invention.
FIG. 7 is a cross-sectional view schematically showing another example of the gas-permeable membrane of the present invention.
FIG. 8A is a plan view schematically showing an example of a gas-permeable member of the present invention.
FIG. 8B is a cross-sectional view showing a cross-section B-B of the gas-permeable member shown in FIG. 8A.
FIG. 9A is a perspective view schematically showing an example of a light-emitting device of the present invention.
FIG. 9B is a perspective view schematically showing a fixed state of the gas-permeable membrane in the light-emitting device shown in FIG. 9A.

DESCRIPTION OF EMBODIMENTS

A gas-permeable membrane according to a first aspect of the present invention is a gas-permeable membrane having air permeability in a thickness direction, colored, and including:

a first principal surface; and
a second principal surface opposite the first principal surface, wherein
the second principal surface has a lightness greater than that of the first principal surface,
an absolute value of difference in the lightness between the first principal surface and the second principal surface is 1.5 or more and 76 or less,
the second principal surface has the lightness of 20 or more and 95 or less, and
luminous transmittance of light transmitted from the first principal surface to the second principal surface is 0.015 or

less, wherein
the lightness refers to lightness L* of CIE1976 L*,a*,b* color space specified in JIS Z8781-4:2013, and
the luminous transmittance is represented by a stimulus value Y of CIE tristimulus values specified in JIS Z8781-3:2016.

According to a second aspect of the present invention, for example, in the gas-permeable membrane according to the first aspect, the second principal surface has a first circular region and a second circular region each of which has a circle with a diameter of 6 mm,

the first circular region and the second circular region are defined as a region in which the lightness is greatest in the second principal surface and a region in which the lightness is smallest in the second principal surface, respectively, and
an absolute value of difference in the lightness between the first circular region and the second circular region is 2.0 or more.

According to a third aspect of the present invention, for example, in the gas-permeable membrane according to the first or the second aspect, the second principal surface has a first band-shaped region, and a second band-shaped region which is adjacent to the first band-shaped region and which has the lightness smaller than that of the first band-shaped region.

According to a fourth aspect of the present invention, for example, the gas-permeable membrane according to any one of the first to the third aspects includes a polytetrafluoroethylene (PTFE) porous membrane.

According to a fifth aspect of the present invention, for example, the gas-permeable membrane according to any one of the first to the fourth aspects is formed of a monolayer polytetrafluoroethylene (PTFE) porous membrane.

According to a sixth aspect of the present invention, for example, the gas-permeable membrane according to any one of the first to the fifth aspects includes a uniaxially stretched membrane.

According to a seventh aspect of the present invention, for example, the gas-permeable membrane according to any one of the first to the sixth aspects has a water entry pressure of 5 kPa or more evaluated by a water resistance test specified in JIS L1092:2009.

According to an eighth aspect of the present invention, for example, the gas-permeable membrane according to any one of the first to the seventh aspects has an air permeability in the thickness direction of 200 seconds/100 mL or less, as expressed by air permeability (Gurley air permeability) evaluated in accordance with Method B (Gurley method) of air permeability measurement specified in JIS L1096:2010.

According to a ninth aspect of the present invention, for example, the gas-permeable membrane according to any one of the first to the eighth aspects has a thickness of more than 100 μm.

A gas-permeable member according to a tenth aspect of the present invention includes:

the gas-permeable membrane according to any one of the first to the ninth aspects; and
a support member for supporting the gas-permeable membrane.

A light-emitting device according to an eleventh aspect of the present invention includes:

a housing having an opening;
a light source housed in the housing; and
a gas-permeable membrane fixed to the housing so as to cover the opening, wherein
the gas-permeable membrane is the gas-permeable membrane according to any one of the first to the ninth aspects.

According to a twelfth aspect of the present invention, for example, in the light-emitting device according to the eleventh aspect, the gas-permeable membrane is fixed to the housing such that the first principal surface faces inside of the housing.

An embodiment of the present invention will be described below. The present invention is not limited to the following embodiment.

[Gas-permeable membrane]

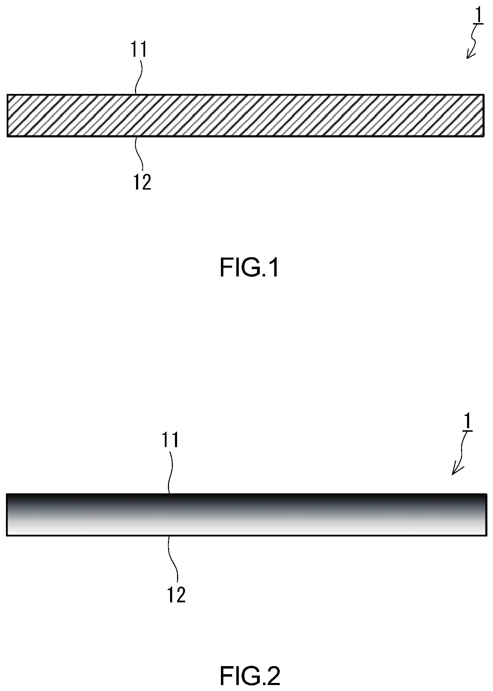

FIG. 1 shows an example of a gas-permeable membrane of the present embodiment. A gas-permeable membrane 1 shown in FIG. 1 has air permeability in the thickness direction, and is colored. The gas-permeable membrane 1 has a first principal surface 11 and a second principal surface 12 opposite the first principal surface 11. The second principal surface 12 has a lightness greater than that of the first principal surface 11. In other words, the first principal

surface 11 and the second principal surface 12 are a principal surface having a relatively small lightness and a principal surface having a relatively great lightness, respectively. An absolute value d1 of difference in lightness between the first principal surface 11 and the second principal surface 12 is 1.5 or more and 76 or less. The second principal surface 12 has lightness of 20 or more and 95 or less. Luminous transmittance of light transmitted from the first principal surface 11 to the second principal surface 12 is 0.015 or less. The lightness refers to lightness L* of CIE1976 L*, a*, b* color space specified in Japanese Industrial Standards (hereinafter, referred to as JIS) Z8781-4:2013. The luminous transmittance is represented by a stimulus value Y of CIE tristimulus values specified in JIS Z8781-3:2016. In the gas-permeable membrane 1, a degree of coloring is higher in the first principal surface 11 as compared with the second principal surface 12 in general. The gas-permeable membrane 1 in FIG. 1 includes a polytetrafluoroethylene (hereinafter, referred to as PTFE) porous membrane. More specifically, the gas-permeable membrane 1 is formed of a monolayer PTFE porous membrane. The lightness L* of a principal surface of an uncolored PTFE porous membrane is about 93 to 97 in general.

A measuring device such as a spectrocolorimeter or a colorimeter compliant with the above-described standard can be used for measuring the lightness L*. The lightness L* may be obtained by converting a stimulus value Y of CIE tristimulus values obtained in accordance with the standard of JIS Z8722:2009 using a conversion equation. It is known by a person skilled in the art that a conversion equation of Equation: $L^*=116(Y/Yn)^{1/3}-16$ (when $Y/Yn>0.008856$) or Equation: $L^*=903.29(Y/Yn)$; (when $Y/Yn\leq 0.008856$) is satisfied between the lightness L* and the stimulus value Y. Yn is measured by using a white reflection standard (white plate) calibrated with respect to the same measuring device and a perfect reflecting diffuser. A measuring device such as a spectrocolorimeter or a colorimeter compliant with the above-described standard can be used for measuring the stimulus value Y. The stimulus value Y is obtained under the following measurement conditions.

·The measurement is performed in a geometric condition g (di: 0°).
·The diameter of an integrating sphere is 150 mm.
·Normalization is performed such that the stimulus values X, Y, Z in colorimetry of a standard white plate fall within ±0.03 of the reference value.
·An auxiliary illuminant C for colorimetry as specified in JIS Z8720:2012 is used as a light source.

An area (hereinafter, referred to as evaluation area) of an evaluation region for a measuring device for obtaining the lightness L* of the first principal surface 11 and the second principal surface 12 is set to be in a range of 700 to 750 $mm^2$. In a case where the area of the principal surface 11, 12 to be measured is small, and the evaluation area of 700 $mm^2$ cannot be ensured, the evaluation area may be made small. However, in this case, the lightness L* is evaluated in at least 20% of the entire area of the principal surface 11, 12 to be measured. An evaluation area in which the evaluation with the above-described proportion can be achieved by measurement at one spot on the principal surface, may be set. Alternatively, an evaluation area in which the evaluation with the above-described proportion can be achieved by evaluation at a plurality of spots randomly selected on the principal surface, is set, and the average value of the measured values at the respective spots may be set as the lightness L*.

The luminous transmittance Y is represented by a stimulus value Y of CIE tristimulus values specified in JIS Z8781-3:2016. The stimulus value Y can be obtained in accordance with the standard of JIS Z8722:2009. It is known by a person skilled in the art that the stimulus value Y corresponds to luminous transmittance in evaluation of a transmitting object. The condition for measuring the stimulus value Y is as described above. When the luminous transmittance Y is obtained, an evaluation area is set to be in a range of 165 to 185 $mm^2$. In a case where the area of the principal surface 11, 12 to be measured is small, and the evaluation area of 165 $mm^2$ cannot be ensured, the evaluation area may be made small. However, in this case, the luminous transmittance Y is evaluated in at least 20% of the entire area of the principal surface 11, 12 to be measured. An evaluation area in which the evaluation with the above-described proportion can be achieved by measurement at one spot on the principal surface, may be set. Alternatively, an evaluation area in which the evaluation with the above-described proportion can be achieved by evaluation at a plurality of spots randomly selected on the principal surface, is set, and the average value of the measured values at the respective spots may be set as the luminous transmittance Y.

The lower limit of the absolute value d1 of difference in lightness L* between the first principal surface 11 and the second principal surface 12 is 5 or more, 9 or more, 10 or more, 15 or more, 20 or more, 25 or more, 30 or more, 33 or more, 35 or more, 40 or more, 45 or more, 47 or more, 50 or more, or 52 or more, and furthermore, may be 55 or more. The upper limit of the absolute value d1 is 75 or less, 72 or less, 70 or less, 67 or less, 65 or less, 62 or less, or 60 or less, and furthermore, may be 57 or less.

The lightness L* of the second principal surface 12 is 25 or more, 28 or more, 30 or more, 35 or more, 40 or more, 45 or more, 50 or more, 52 or more, 55 or more, 57 or more, 60 or more, 62 or more, 65 or more, 67 or more, 70 or more, or 72 or more, and furthermore, may be 75 or more. The lightness L* of the second principal surface 12 is less than 93, and is 92 or less, 91 or less, 90 or less, or 88 or less, and furthermore, may be 86 or less. The second principal surface 12 may be colored.

The lightness L* of the first principal surface 11 is, for example, less than 50, and may be 47 or less, 45 or less, 42 or less, 40 or less, 37 or less, 35 or less, 32 or less, 30 or less, 27 or less, 25 or less, or 22 or less, and furthermore, may be 20 or less. The lower limit of the lightness L* of the first principal surface 11 is, for example, 5 or more, and may be 7 or more, 10 or more, 12 or more, 15 or more, 17 or more, or 20 or more, and furthermore, may be 23 or more.

The luminous transmittance Y of light transmitted from the first principal surface 11 to the second principal surface 12 is 0.013 or less, 0.011 or less, 0.010 or less, 0.008 or less, 0.006 or less, 0.005 or less, 0.003 or less, or 0.002 or less, and furthermore, may be 0.001 or less. The lower limit of the luminous transmittance Y may be 0.000.

The luminous transmittance Y of light transmitted from the second principal surface 12 to the first principal surface 11 may be in the same range as exemplified in the description for the luminous transmittance Y of light transmitted from the first principal surface 11 to the second principal surface 12.

The absolute value d1 of difference in lightness L*, the lightness L* of the second principal surface, and the luminous transmittance Y of light transmitted from the first principal surface 11 to the second principal surface 12 may change according to, for example, the structure of the gas-permeable membrane 1 and a coloring method for the gas-permeable membrane 1. Examples of such structure of the gas-permeable membrane 1 include a thickness, a material, and an average pore diameter, and include, in a case where a stretched membrane is included, a stretched state of the stretched membrane and a stretching method for the stretched membrane. The coloring method includes a kind of a colorant.

As long as the second principal surface 12 has the lightness L* greater than that of the first principal surface 11, the absolute value of the lightness L* between the first principal surface 11 and the second principal surface 12 is 1.5 or more and 76 or less, the second principal surface 12 has the lightness L* of 20 or more and 95 or less, and the luminous transmittance Y of light transmitted from the first principal surface 11 to the second principal surface 12 is 0.015 or less, the colored state of the gas-permeable membrane 1 is not limited. In an example of the gas-permeable membrane 1, the coloring is performed in a gradation manner in which a degree of coloring gradually decreases from the first principal surface 11 toward the second principal surface 12 when the cross section in the thickness direction is viewed (see FIG. 2).

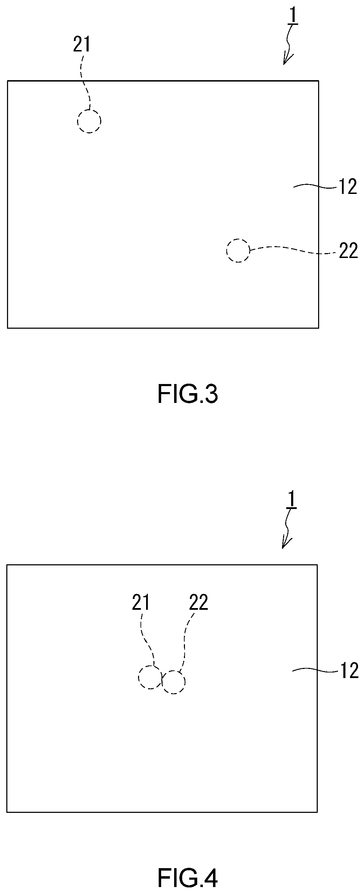

The second principal surface 12 may partially have a region in which the lightness L* is great and a region in which the lightness L* is small. This configuration can contribute to enhancement of visibility of the gas-permeable membrane 1. In an example in which the second principal surface 12 partially has a region in which the lightness L* is great and a region in which the lightness L* is small (see FIG. 3), the second principal surface 12 has a first circular region 21 and a second circular region 22 each of which has a circle with a diameter of 6 mm. The first circular region 21 is defined as a region in which the lightness L* is greatest in the second principal surface 12. The second circular region 22 is defined as a region in which the lightness L* is smallest in the second principal surface 12. An absolute value d2 of difference in lightness L* between the first circular region 21 and the second circular region 22 may be 2.0 or more, and may be 2.5 or more, 3 or more, 4 or more, 5 or more, 6 or more, or 7 or more, and furthermore, may be 8 or more. The upper limit of the absolute value d2 of difference in lightness L* is, for example, 76 or less, and may be 70 or less, 65 or less, 60 or less, 55 or less, 50 or less, 45 or less, 40 or less, 35 or less, or 30 or less, and furthermore, may be 25 or less. The area of the evaluation region in which the absolute value d2 of difference in lightness L* is measured may be 1000 $mm^2$ or less, and may be 800 $mm^2$ or less, 600 $mm^2$ or less, 500 $mm^2$ or less, or 400 $mm^2$ or less, and furthermore, may be 300 $mm^2$ or less. The second principal surface 12 which partially has a region in which the lightness L* is great and a region in which the lightness L* is small can be, for example, visually recognized as a principal surface having a patchy pattern, a marbled pattern, a rippled pattern, or a striped pattern.

As shown in FIG. 4, the first circular region 21 and the second circular region 12 may be adjacent to each other in the second principal surface 12.

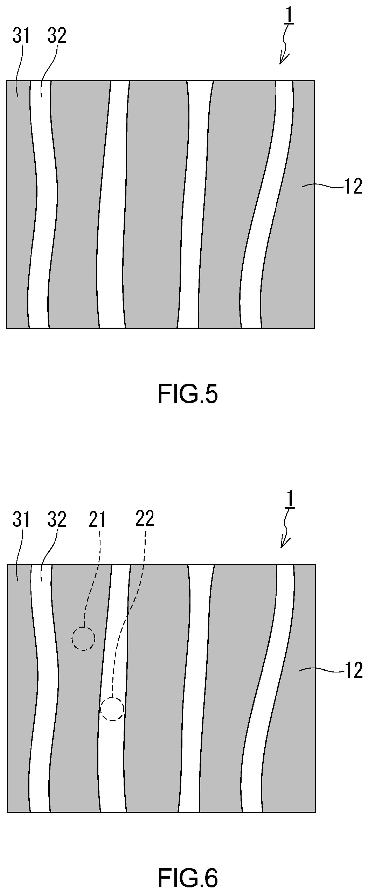

In another example in which the second principal surface 12 partially has a region in which the lightness L* is great and a region in which the lightness L* is small (see FIG. 5), the second principal surface 12 has a first band-shaped region 31, and a second band-shaped region 32 which is adjacent to the first band-shaped region 31 and has the lightness L* smaller than that of the first band-shaped region 31. The first band-shaped region 31 and the second band-shaped region 32 each have visually recognizable degrees of width and length in general. The width may be varied along the direction in which each band-shaped region extends, and the width may be irregularly varied. As shown in FIG. 6, the first band-shaped region 31 may include the first circular region 21. The second band-shaped region 32 may include the second circular region 22. The first circular region 21 included in the first band-shaped region 31 and the second circular region 22 included in the second band-shaped region 32 may be adjacent to each other in the second principal surface 12. The first band-shaped region 31 and the second band-shaped region 32 can exist in a range of an area of 1000 $mm^2$ or less, 800 $mm^2$ or less, 600 $mm^2$ or less, 500 $mm^2$ or less, or 400 $mm^2$ or less, and furthermore, 300 $mm^2$ or less in the second principal surface 12.

Determination result as to whether or not the second principal surface 12 partially has a region in which the lightness L* is great and a region in which the lightness L* is small, and the structure of each region in the case of the second principal surface 12 partially having these regions, may change according to, for example, the structure of the gas-permeable membrane 1 and the coloring method therefor. Examples of such structure of the gas-permeable membrane 1

include a thickness, a material, and an average pore diameter, and include, in a case where a stretched membrane is included in the gas-permeable membrane 1, a stretched state of the stretched membrane and a stretching method for the stretched membrane. The coloring method includes a kind of a colorant. According to study made by the inventors of the present invention, in a case where a coloring method in which a dyeing liquid is applied to one principal surface of an original membrane before coloring is selected, the larger the thickness of the gas-permeable membrane 1 is, and the more the gas-permeable membrane 1 includes a uniaxially stretched membrane, the more likely the second principal surface 12 is to partially have a region in which the lightness L* is great and a region in which the lightness L* is small, although it depends on a material of the gas-permeable membrane 1.

The gas-permeable membrane 1 in FIG. 1 includes a PTFE porous membrane. The gas-permeable membrane 1 may include a membrane other than a PTFE porous membrane. In the description herein, the porous membrane refers to a membrane having a plurality of pores that can contribute to air permeation in the thickness direction. Examples of the other membrane include a porous membrane formed of a resin other than PTFE. Examples of the other resin include fluorine resin, such as polychlorotrifluoroethylene, tetrafluoroethylene-hexafluoropropylene copolymers, tetrafluoroethylene-perfluoroalkyl vinyl ether copolymers, and tetrafluoroethylene-ethylene copolymers, other than PTFE, and polyolefin such as polyethylene, ultrahigh molecular weight polyethylene, polypropylene, poly 4-methylpentene-1, and poly 1-butene. A PTFE porous membrane is particularly suitable in order to achieve air permeability and waterproofness in the gas-permeable membrane 1 in a well-balanced manner, and reduce transmission of water and foreign matter such as dust.

The average pore diameter of the PTFE porous membrane is, for example, 0.01 to 5 μm, and may be 2 μm or less, and furthermore, may be 1 μm or less. The average pore diameter of the PTFE porous membrane can be measured in accordance with ASTM (American Society for Testing and Materials) F316-86.

The porosity of the PTFE porous membrane is, for example, 50 to 99%. The porosity of the PTFE porous membrane 1 can be calculated by substituting a mass, a thickness, an area (area of the principal surface), and a true density of the membrane into the following equation. The true density of PTFE is 2.18 g/cm$^3$.

$$\text{porosity (\%)}=\{1-(\text{mass [g]}/(\text{thickness [cm]}\times\text{area [cm}^2]\times\text{true density [g/cm}^3])))\}\times 100 \quad \text{Equation:}$$

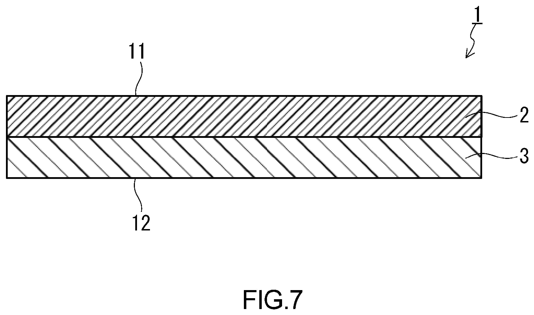

The gas-permeable membrane 1 in FIG. 1 is a monolayer one. The gas-permeable membrane 1 may be a multilayer one including two or more layers. The multilayer gas-permeable membrane 1 may include one, or two or more PTFE porous membranes or may be formed of two or more PTFE porous membranes. FIG. 7 shows an example of the gas-permeable membrane 1 formed of two or more PTFE porous membranes. The gas-permeable membrane 1 in FIG. 7 includes a first PTFE porous membrane 2 and a second PTFE porous membrane 3. The principal surface of the first PTFE porous membrane 2 forms the first principal surface 11, and the principal surface of the second PTFE porous membrane 3 forms the second principal surface 12. The first PTFE porous membrane 2 is normally colored. The first PTFE porous membrane 2 and the second PTFE porous membrane 3 may be different in degree of coloring. In other words, the gas-permeable membrane 1 may include two or more PTFE porous membranes 2, 3 which are different in degree of coloring. The second PTFE porous membrane 3 may be colored or uncolored.

The gas-permeable membrane 1 may include a uniaxially stretched membrane. The stretched membrane normally has a specific pore structure that can be varied according to a stretching method and a stretching condition. According to study made by the inventors of the present invention, a pore structure of a uniaxially stretched membrane can contribute to allowing the second principal surface 12 to partially have a region in which the lightness L* is great and a region in which the lightness L* is small.

The uniaxially stretched membrane which can be included in the gas-permeable membrane 1 may be a PTFE porous membrane. The PTFE porous membrane is normally formed of numerous PTFE fine fibers (fibrils), and may have a PTFE aggregated portion (node) in which a plurality of fibrils are connected. The fibril is typically formed by stretching a PTFE sheet that is a PTFE aggregate. The PTFE porous membrane that is a uniaxially stretched membrane can have a structure in which a plurality of fibrils are connected between nodes having relatively large sizes although it depends on a stretch temperature.

The gas-permeable membrane 1 may have a thickness of more than 100 μm. The thickness is 105 μm or more, 110 μm or more, 120 μm or more, 130 μm or more, or 140 μm or more, and furthermore, may be 150 μm or more. The upper limit of the thickness is, for example, 5000 μm or less. However, the thickness of the gas-permeable membrane 1 is not limited to the above-described examples. According to study made by the inventors of the present invention, the large thickness of the gas-permeable membrane 1 can contribute to allowing the second principal surface 12 to partially have a region in which the lightness L* is great and a region in which the lightness L* is small.

The gas-permeable membrane 1 can have waterproofness. The gas-permeable membrane 1 may have a water entry pressure of 5 kPa or more evaluated by a water resistance test specified in JIS L1092:2009. The water entry pressure is 10 kPa or more, 20 kPa or more, 30 kPa or more, 40 kPa or more, 50 kPa or more, 60 kPa or more, 70 kPa or more, 80 kPa or more, or 90 kPa or more, and furthermore, may be 100 kPa or more. The upper limit of the water entry pressure may be

400 kPa or less. The water entry pressure may be a value obtained when the first principal surface 11 is a surface to which water pressure is applied during the test.

The water entry pressure of the gas-permeable membrane 1 can be measured using a measurement jig in accordance with the above-described water resistance test method, as follows. An example of the measurement jig is a stainless steel disc which has a diameter of 47 mm and has, at the center thereof, a through hole (having a circular cross-section) having a diameter of 2 mm. This disc has such a thickness that the disc is not deformed by the water pressure applied in measurement of the water entry pressure. Measurement of the water entry pressure using this measurement jig can be performed as follows.

The gas-permeable membrane 1 to be evaluated is fixed to one surface of the measurement jig so as to cover an opening of the through hole of the measurement jig. The fixation is performed such that no water leaks from a fixed portion of the membrane during measurement of the water entry pressure. For fixing the gas-permeable membrane 1, a double-sided pressure-sensitive adhesive tape which has a water port punched in a center portion with a shape that matches the shape of the opening, can be used. The double-sided pressure-sensitive adhesive tape can be disposed between the measurement jig and the gas-permeable membrane 1 such that the circumference of the water port matches the circumference of the opening. Subsequently, the measurement jig, to which the gas-permeable membrane 1 is fixed, is set on a testing device such that a surface opposite to a surface to which the gas-permeable membrane 1 is fixed is a surface to which water pressure is applied in the measurement. Then, the water entry pressure is measured in accordance with Method A (low water pressure method) or Method B (high water pressure method) of the water resistance test specified in JIS L1092:2009. The water entry pressure is measured based on a water pressure obtained when water comes out from one spot on the membrane surface of the gas-permeable membrane 1. The measured water entry pressure can be regarded as the water entry pressure of the gas-permeable membrane 1. As the testing device, a device which has a similar configuration to the water resistance testing device exemplified in JIS L1092:2009, and has a test piece attachment structure in which the above-described measurement jig can be set, can be used.

The air permeability of the gas-permeable membrane 1 in the thickness direction as expressed by air permeability (Gurley air permeability) obtained in accordance with Method B (Gurley method) of air permeability measurement specified in JIS L1096:2010 is, for example, 200 seconds/100 mL or less, and may be 150 seconds/100 mL or less, 100 seconds/100 mL or less, 75 seconds/100 mL or less, 50 seconds/100 mL or less, 45 seconds/100 mL or less, 40 seconds/100 mL or less, 35 seconds/100 mL or less, 30 seconds/100 mL or less, 25 seconds/100 mL or less, or 20 seconds/100 mL or less, and furthermore, may be 18 seconds/100 mL or less. The lower limit of the Gurley air permeability is, for example, 0.5 seconds/100 mL or more, and may be 1 second/100 mL or more, 3 seconds/100 mL or more, 5 seconds/100 mL or more, or 8 seconds/100 mL or more, and furthermore, may be 10 seconds/100 mL or more. The Gurley air permeability may be a value obtained when the first principal surface 11 is a surface to which pressure is applied during the test.

Even when the size of the gas-permeable membrane 1 does not satisfy a recommended size (about 50 mm×120 mm) of a test piece in the Gurley method, Gurley air permeability can be evaluated by using a measurement jig An example of the measurement jig is a polycarbonate disc which has a through hole (having a circular cross-section with a diameter of 1 mm or 2 mm) at the center thereof and has a thickness of 2 mm and a diameter of 47 mm. Measurement of the Gurley air permeability using this measurement jig can be performed as follows.

The gas-permeable membrane 1 to be evaluated is fixed to one surface of the measurement jig so as to cover an opening of the through hole of the measurement jig. The fixation is performed such that, during measurement of Gurley air permeability, air passes through only the opening and an effective test portion (portion overlapping the opening as viewed in the direction perpendicular to a principal surface of the fixed gas-permeable membrane 1) of the gas-permeable membrane 1 to be evaluated, and the fixed portion of the gas-permeable membrane 1 does not hinder passage of air through the effective test portion of the gas-permeable membrane 1. For fixing the gas-permeable membrane 1, a double-sided pressure-sensitive adhesive tape which has a ventilation port punched in a center portion with a shape that matches the shape of the opening, can be used. The double-sided pressure-sensitive adhesive tape can be disposed between the measurement jig and the gas-permeable membrane 1 such that the circumference of the ventilation port matches the circumference of the opening. Subsequently, the measurement jig, to which the gas-permeable membrane 1 is fixed, is set on a Gurley air permeability testing machine such that the surface on which the gas-permeable membrane 1 is fixed is at the downstream side of airflow during measurement, and a time t1 in which 100 mL of air passes through the gas-permeable membrane 1 is measured. Subsequently, the measured time t1 is converted into a value t per effective test area of 642 [$mm^2$] specified in Method B (Gurley method) of air permeability measurement in JIS L1096:2010, using the equation t={(t1)×(area [$mm^2$] of effective test portion of the gas-permeable membrane/642 [$mm^2$]}, and the obtained conversion value t can be regarded as the Gurley air permeability of the gas-permeable membrane 1. When the above-described disc is used as the measurement jig, the area of the effective test portion of the gas-permeable membrane 1 is the area of the cross-section of the through hole. It has been confirmed that the Gurley air permeability measured without using the measurement jig for the gas-permeable membrane 1 satisfying the above-described test piece size and the Gurley air permeability measured using the measurement jig after fragmenting the gas-permeable membrane 1 coincide

well with each other, that is, the use of the measurement jig does not substantially affect the measured values of the Gurley air permeability.

The gas-permeable membrane 1 is typically colored black or gray. However, the color in the coloring is not limited to the above-described examples.

The colorant may be a dye or a pigment. However, a dye is preferable from the viewpoint of preventing removal thereof from the gas-permeable membrane 1. Removal of the colorant from the gas-permeable membrane 1 may cause, for example, discoloration or damage to an electric circuit or an electronic component disposed near the gas-permeable membrane 1 in the case of the colorant being electrically conductive. In a case where the colorant is a dye or an insulating pigment, an insulating gas-permeable membrane 1 can be obtained although it depends on a material of the gas-permeable membrane 1. The insulation property is represented by, for example, surface resistivity of $1 \times 10^{14}$ Ω/□ or more at least at one of the first principal surface 11 and the second principal surface 12. The surface resistivity is $1 \times 10^{15}$ Ω/□ or more, and may be $1 \times 10^{16}$ Ω/□ or more, and furthermore, may be $1 \times 10^{17}$ Ω/□ or more.

Examples of the dye include azo dyes and oil-soluble dyes. Examples of the pigment include carbon black and metal oxides. However, the dye and the pigment are not limited to the above-described examples.

The shape of the gas-permeable membrane 1 is, for example, a polygonal shape including a square shape and a rectangular shape, a circular shape, an ellipsoidal shape, an irregular shape, or a band-like shape as viewed in the direction perpendicular to the first principal surface 11 and the second principal surface 12. However, the shape of the gas-permeable membrane 1 is not limited to the above-described examples.

The gas-permeable membrane 1 may be a membrane subjected to liquid repellent treatment. The liquid repellent treatment can be performed in a known method. The liquid repellent treatment includes water repellent treatment and oil repellent treatment. The gas-permeable membrane 1 may be a membrane that is not subjected to liquid repellent treatment

The gas-permeable membrane 1 can be used, for example, as a membrane that allows transmission of gas while obstructing water and foreign matter such as dust. Examples of the gas-permeable membrane include a waterproof membrane which is disposed at an opening of a housing of a light-emitting device such as a lamp and which allows transmission of gas while preventing water from entering through the opening, and a dustproof membrane which is disposed at the above-described opening and which allows transmission of gas while preventing dust from entering through the opening. The light-emitting device is not limited to a lamp. Furthermore, the housing in which the gas-permeable membrane 1 is disposed may be a housing of an electronic component or an electronic device other than a light-emitting device. The usage of the gas-permeable membrane 1 is not limited to the above-described examples. The gas-permeable membrane 1 may be positioned at the opening such that the first principal surface 12 having the relatively small lightness L* faces the inside of the housing. Such positioning is particularly suitable for reducing light from leaking through the gas-permeable membrane 1 from a light-emitting device.

The gas-permeable membrane 1 can be produced, for example, by applying a coloring liquid containing a colorant to one principal surface of an original membrane before coloring, and then removing a solvent and a dispersion medium (hereinafter, the solvent and the dispersion medium are collectively referred to as "solvent") contained in a dyeing liquid through drying or the like. For the application, a known application method is adoptable. However, the method for producing the gas-permeable membrane 1 is not limited to the above-described example. The principal surface (applied surface) to which the coloring liquid is applied can be the first principal surface 11 having the relatively small lightness L*.

The coloring liquid may not necessarily contain a liquid repellent agent. In a case where the coloring liquid contains a liquid repellent agent, increase of difference in lightness L* between the first principal surface 11 and the second principal surface 12 may become difficult due to increase of wettability of the coloring liquid with respect to the original membrane although it depends on a material of the gas-permeable membrane 1.

In a case where the colorant is a dye, the concentration of the dye in the coloring liquid (dyeing liquid) is, for example, 1 weight% or more, and may be 2 weight% or more, 3 weight% or more, or 4 weight% or more, and furthermore, may be 4.5 weight% or more.

In a case where the coloring liquid contains a liquid repellent agent, a blending amount of the liquid repellent agent is, for example, less than 20 parts by weight, and may be 18 parts by weight or less, and furthermore, may be 16 parts by weight or less with respect to 100 parts by weight of the colorant.

The original membrane can be formed in a known method. In an example, the original membrane that is a PTFE porous membrane can be formed by, for example, extruding and rolling a kneaded product of PTFE fine powder and a molding aid into a sheet-like shape and removing the molding aid, and thereafter, further stretching the obtained product. The stretching may be uniaxial stretching. The stretching may be performed at a temperature higher than a melting point of PTFE.

[Gas-permeable member]

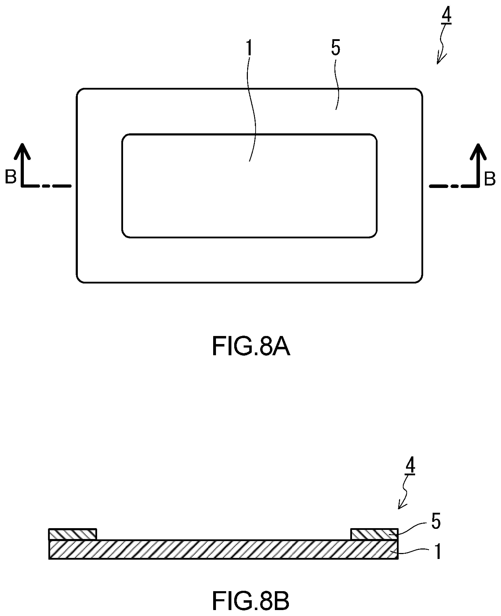

FIG. 8A and FIG. 8B show an example of a gas-permeable member of the present embodiment. FIG. 8B shows a

cross-section B-B of a gas-permeable member 4 in FIG. 8A. The gas-permeable member 4 in FIG. 8A and FIG. 8B includes the gas-permeable membrane 1 and a support member 5 for supporting the gas-permeable membrane 1. In the example shown in FIG. 8A and FIG. 8B, the shape of the gas-permeable membrane 1 is a rectangular shape as viewed in the direction perpendicular to the first principal surface 11 and the second principal surface 12. The shape of the support member 5 is a shape matching the shape of the peripheral edge portion of the gas-permeable membrane 1 as viewed in the above-described direction, and is, specifically, a frame-like shape. However, the shapes of the gas-permeable membrane 1 and the support member 5 are not limited to the above-described examples as long as the gas-permeable membrane 1 can be supported by the support member 5. The gas-permeable member 4 having the support member 5 can reinforce the gas-permeable membrane 1 and can enhance handleability of the gas permeable membrane 1. Furthermore, the support member 5 can serve as an attaching margin for the gas-permeable membrane 1.

A material of the support member 5 is typically a resin, a metal, or a composite material thereof. The support member 5 may be a double-sided pressure-sensitive adhesive tape.

For laminating the gas-permeable membrane 1 and the support member 5, for example, various joining methods such as thermal lamination, heat welding, ultrasonic welding, and joining by an adhesive or a pressure-sensitive adhesive can be used.

In the gas-permeable member 4 in FIG. 8A and FIG. 8B, the support member 5 is disposed on one side of the gas-permeable membrane 1. The support member 5 may be disposed at each of both sides of the gas-permeable membrane 1.

The gas-permeable member 4 may be a waterproof member that includes the gas-permeable membrane 1 as a waterproof membrane. The gas-permeable member 4 may be a dustproof member that includes the gas-permeable membrane 1 as a dustproof membrane.

[Light-emitting device]

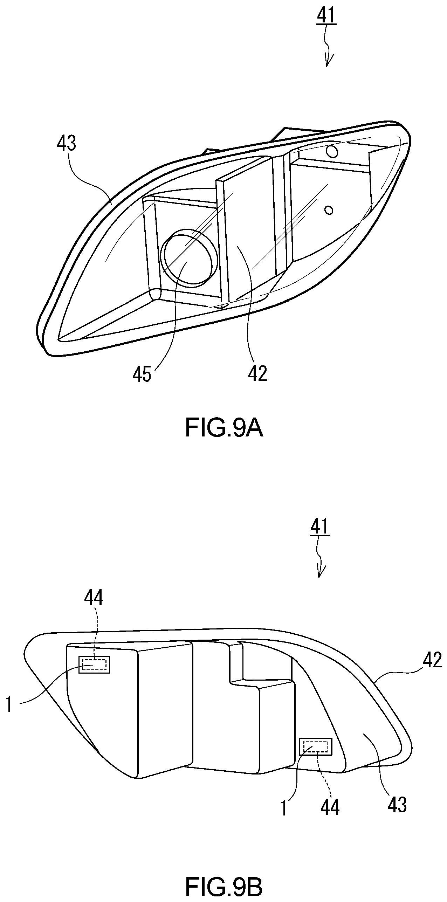

FIG. 9A and FIG. 9B show an example of a light-emitting device of the present embodiment. The light-emitting device shown in FIG. 9A and FIG. 9B is a lamp 41 for vehicles. FIG. 9A shows the lamp 41 as viewed from an irradiation surface 42 side. FIG. 9B shows the lamp 41 as viewed from the side opposite to the irradiation surface 42 side. A housing 43 of the lamp 41 has two openings 44, and the gas-permeable membrane 1 is fixed so as to cover each opening 44. The gas-permeable membrane 1 is fixed to the housing 43 such that the first principal surface 11 having the relatively small lightness L* faces the inside of the housing 43. The gas-permeable membrane 1 covers the opening 44 from the outside of the housing 43. In the lamp 41, by fixing the gas-permeable membrane 1, transmission of light from a light source 45 through the opening 44 is reduced. Furthermore, the gas-permeable membrane 1 is suitable for visual recognition during inspection of the lamp 41 since the second principal surface 12 faces the outside of the housing 43.

Examples of the light-emitting device include a lamp, a signal lamp, and backlight of an electronic device such as a camera and a display. The light-emitting device may be used for vehicles. However, the light-emitting device is not limited to the above-described examples.

Examples

Hereinafter, the present invention will be described in more detail by way of examples. The present invention is not limited to the following examples.

[Evaluation method]

A method for evaluating gas-permeable membranes produced in the examples described below is indicated

(Lightness L*)

A stimulus value Y of CIE tristimulus values was measured by a spectrocolorimeter (manufactured by NIPPON DENSHOKU INDUSTRIES CO., LTD., SE6000) capable of making an evaluation compliant with the standard of JIS Z8722:2009, and was converted to L* using a conversion equation of $L^*=116(Y/Yn)^{1/3}-16$, to obtain the lightness L* of the principal surface. The lightness L* was evaluated for each of the first principal surface 11 and the second principal surface 12. The measurement condition was as described above. The evaluation region for obtaining the lightness L* was a circular region (area of 706.5 $mm^2$) having a diameter of 30 mm.

The lightness L* of each of the first circular region 21 and the second circular region 22 in the second principal surface 12 was obtained in the same manner as for the lightness L* of the principal surface except that each of the evaluation regions of the first and the second circular regions was a circular region (area of 28.3 $mm^2$) having a diameter of 6 mm.

(Luminous transmittance Y)

A stimulus value Y of CIE tristimulus values was measured by a spectrocolorimeter (manufactured by MURAKAMI COLOR RESEARCH LABORATORY, integrating sphere spectrophotometric transmittance meter DOT-3C) capable of making an evaluation compliant with the standard of JIS Z8722:2009, and was specified as the luminous transmittance Y. The evaluation was made for each of light transmitted from the first principal surface 11 to the second principal surface 12 and light transmitted from the second principal surface 12 to the first principal surface 11. The measurement condition was as described above. The evaluation region for obtaining the luminous transmittance Y was a circular region (area of 176.6 $mm^2$) having a diameter of 15 mm.

(Water entry pressure)

The water entry pressure (limit water entry pressure) was evaluated by the above-described method. In the evaluation, the first principal surface 11 was set as a surface to which water pressure was applied.

(Air permeability in thickness direction)

The air permeability in the thickness direction was evaluated as Gurley air permeability by the above-described method. In the evaluation, the first principal surface 11 was set as a surface to which pressure was applied.

[Production of original membrane]

(Original membrane A)

A mixture was obtained by uniformly mixing 100 parts by weight of PTFE fine powder (manufactured by AGC, CD123E) and 20 parts by weight of ISOPAR M (manufactured by ANDOH PARACHEMIE CO., LTD.) as a molding aid. The obtained mixture was compressed by using a cylinder and then subjected to ram extrusion, and was thus formed into a sheet-like shape. Subsequently, the sheet-shaped mixture was rolled through a pair of metal rolls so as to have a thickness of 0.24 mm. Subsequently, the molding aid was dried and removed by heating at 170°C, to obtain a sheet molded body. Subsequently, the sheet molded body was stretched in the longitudinal direction (rolling direction) at a stretch temperature of 380°C at a stretch ratio of 4.2 times, and a PTFE porous membrane was obtained as an original membrane A. The obtained porous membrane was a uniaxially stretched membrane.

(Original membrane B)

A mixture was obtained by uniformly mixing 100 parts by weight of PTFE fine powder (manufactured by DAIKIN INDUSTRIES, LTD., F104) and 20 parts by weight of n-dodecane (manufactured by Japan Energy Corporation) as a molding aid. The obtained mixture was compressed by using a cylinder and then subjected to ram extrusion, and was thus formed into a sheet-like shape. Subsequently, the sheet-shaped mixture was rolled through a pair of metal rolls so as to have a thickness of 0.2 mm and then stretched in the width direction at a ratio of 4.5 times, and furthermore, the molding aid was dried and removed by heating at 150°C, to obtain a sheet molded body. Subsequently, the sheet molded body was stretched in the longitudinal direction (rolling direction) at a stretch temperature of 300°C at a stretch ratio of 4 times, and then stretched in the width direction at a stretch temperature of 150°C at a stretch ratio of 25 times, and further sintered at 400°C, to obtain a PTFE porous membrane as an original membrane B. The obtained porous membrane was a biaxially stretched membrane.

(Examples 1 to 5 and 7 to 8, Comparative examples 2 to 4)

A mixture of a black dye (manufactured by Orient Chemical Industries Co., Ltd., SP BLACK 91L, the concentration of the dye was 25 weight%) and a solvent was prepared as a dyeing liquid. The solvent was added such that the concentration (solid content concentration; the same applies hereinafter) of the dye in the dyeing liquid had a value indicated below in Table 1. The solvent was methyl ethyl ketone (MEK). Subsequently, the prepared dyeing liquid was applied to one of the principal surfaces of the original membrane A, and was thereafter naturally dried in an atmosphere of 20°C and a relative humidity of 50%, to obtain a gas-permeable membrane of each of Examples 1 to 5 and 7 to 8 and Comparative examples 2 to 4, which was colored with the above-described dye. The dyeing liquid was applied by an applicator such that the applied thickness as indicated in Table 1 was obtained.

[Table 1]

| Dyeing liquid | Example | | | | | | | Comparative example | | |
|---|---|---|---|---|---|---|---|---|---|---|
| | 1 | 2 | 3 | 4 | 5 | 7 | 8 | 2 | 3 | 4 |
| Concentration of dye (weight%) | 4.7 | 4.7 | 4.7 | 4.7 | 2.0 | 6.3 | 4.7 | 1.0 | 0.25 | 4.7 |
| Applied thickness (μm) | 65 | 80 | 94 | 18 | 18 | 95 | 105 | 18 | 18 | 114 |

(Example 6)

The gas-permeable membrane of Comparative example 4 and the original membrane A were stacked to overlap each other, and a load was applied to the obtained overlapping product in the thickness direction by reciprocating once a roller having a weight of 2 kg, and a gas-permeable membrane of Example 6 formed of two layers of the PTFE porous membrane was obtained.

(Comparative example 1)

A mixture of a black dye (manufactured by Orient Chemical Industries Co., Ltd., SP BLACK 91L, the concentration of the dye was 25 weight%) and a solvent was prepared as a dyeing liquid. The solvent was added such that the concentration of the dye in the dyeing liquid was 2.1 weight%. The solvent was a mixed solution of toluene and methyl ethyl ketone (MEK). The mixing ratio represented by a volume ratio was toluene:MEK=75:25. Subsequently, the prepared dyeing liquid was applied to one of the principal surfaces of the original membrane B, and was thereafter naturally dried in an atmosphere of 20°C and a relative humidity of 50%, to obtain a gas-permeable membrane of Comparative example 1 which was colored with the above-described dye. The dyeing liquid was applied by an applicator such that the applied thickness was 17 μm.

(Comparative example 5)

The original membrane A was implemented as Comparative example 5.

The evaluation results of the gas-permeable membrane of each of the examples and the comparative examples are indicated below in Table 2A and Table 2B.

[Table 2A]

| | | Example | | | | | | | |
|---|---|---|---|---|---|---|---|---|---|
| | | 1 | 2 | 3 | 4 | 5 | 6 | 7 | 8 |
| Lightness L* | First principal surface | 21.51 | 19.38 | 24.66 | 25.73 | 25.40 | 18.86 | 18.19 | 18.33 |
| | Second principal surface | 85.56 | 75.46 | 89.71 | 91.44 | 90.05 | 94.38 | 51.46 | 28.19 |
| | Absolute value d1 of difference | 64.05 | 56.08 | 65.05 | 65.71 | 64.65 | 75.52 | 32.27 | 9.86 |
| Luminous transmittance Y | From first principal surface to second principal surface | 0.002 | 0.000 | 0.001 | 0.001 | 0.001 | 0.001 | 0.002 | 0.002 |
| | From second principal surface to first principal surface | 0.003 | 0.000 | 0.000 | 0.001 | 0.001 | 0.001 | 0.000 | 0.001 |
| Air permeability (seconds/100 mL) | | 17.9 | 16.0 | 16.4 | 20.1 | 18.6 | 36.4 | 14.1 | 13.2 |
| Water entry pressure (kPa) | | 108 | 110 | 100 | 105 | 90 | 120 | 118 | 103 |
| Thickness (μm) | | 160 | 160 | 160 | 160 | 160 | 320 | 160 | 160 |
| Layer structure | | monolayer | monolayer | monolayer | monolayer | monolayer | two layers | monolayer | monolayer |

[Table 2B]

| | | Comparative example | | | | |
|---|---|---|---|---|---|---|
| | | 1 | 2 | 3 | 4 | 5 |
| Lightness L* | First principal surface | 28.16 | 28.80 | 50.80 | 20.98 | 96.49 |
| | Second principal surface | 45.10 | 89.77 | 89.46 | 22.47 | 96.5 |
| | Absolute value d1 of difference | 16.94 | 60.97 | 38.66 | 1.49 | 0.01 |
| Luminous transmittance Y | From first principal surface to second principal surface | 6.563 | 0.017 | 0.807 | 0.000 | 13.163 |
| | From second principal surface to first principal surface | 5.875 | 0.017 | 0.847 | 0.000 | 13.029 |
| Air permeability (seconds/100 mL) | | 7.6 | 19.0 | 16.4 | 12.4 | 27.6 |
| Water entry pressure (kPa) | | 480 | 100 | 105 | 105 | 120 |
| Thickness (μm) | | 8 | 160 | 160 | 160 | 160 |
| Layer structure | | monolayer | monolayer | monolayer | monolayer | monolayer |

Next, for the gas-permeable membranes of Examples 1, 7, 8 and Comparative example 1, the lightness L* of each of the first circular region and the second circular region in the second principal surface was evaluated, and the results thereof were indicated below in Table 3. For the evaluation of the lightness L* of each of the first circular region and the second circular region, two additional circular regions (third circular region and fourth circular region; each of which had a circle with a diameter of 6 mm) were randomly set and the lightness L* of each region was evaluated. Table 3 collectively indicates the lightness L* of each of the additional circular regions.

[Table 3]

| (Example 1) | | | | |
|---|---|---|---|---|
| | First circular region | Second circular region | Third circular region | Fourth circular region |
| Lightness L* | 92.49 | 83.11 | 91.86 | 84.56 |
| *The absolute value d2 of difference in lightness L* was 9.38. | | | | |

| (Example 7) | | | | |
|---|---|---|---|---|
| | First circular region | Second circular region | Third circular region | Fourth circular region |
| Lightness L* | 56.01 | 33.32 | 53.58 | 39.94 |
| *The absolute value d2 of difference in lightness L* was 22.69. | | | | |

| (Example 8) | | | | |
|---|---|---|---|---|
| | First circular region | Second circular region | Third circular region | Fourth circular region |
| Lightness L* | 29.43 | 21.21 | 26.14 | 27.90 |
| *The absolute value d2 of difference in lightness L* was 8.22. | | | | |

| (Comparative example 1) | | | | |
|---|---|---|---|---|
| | First circular region | Second circular region | Third circular region | Fourth circular region |
| Lightness L* | 46.38 | 44.60 | 45.59 | 45.07 |
| *The absolute value d2 of difference in lightness L* was 1.78. | | | | |

INDUSTRIAL APPLICABILITY

The gas-permeable membrane of the present invention can be used for the same application as for a conventional gas-permeable membrane.

## Claims

**1.** A gas-permeable membrane having air permeability in a thickness direction, colored, and comprising:

a first principal surface; and
a second principal surface opposite the first principal surface, wherein
the second principal surface has a lightness greater than that of the first principal surface,
an absolute value of difference in the lightness between the first principal surface and the second principal surface is 1.5 or more and 76 or less,
the second principal surface has the lightness of 20 or more and 95 or less,
luminous transmittance of light transmitted from the first principal surface to the second principal surface is 0.015 or less,
the lightness refers to lightness L* of CIE1976 L*,a*,b* color space specified in JIS Z8781-4:2013, and
the luminous transmittance is represented by a stimulus value Y of CIE tristimulus values specified in JIS Z8781-3:2016.

**2.** The gas-permeable membrane according to claim 1, wherein

the second principal surface has a first circular region and a second circular region each of which has a circle with a diameter of 6 mm,
the first circular region and the second circular region are defined as a region in which the lightness is greatest in the second principal surface and a region in which the lightness is smallest in the second principal surface, respectively, and
an absolute value of difference in the lightness between the first circular region and the second circular region is 2.0 or more.

**3.** The gas-permeable membrane according to claim 1, wherein the second principal surface has a first band-shaped region, and a second band-shaped region which is adjacent to the first band-shaped region and which has the lightness smaller than that of the first band-shaped region.

**4.** The gas-permeable membrane according to claim 1, wherein the gas-permeable membrane includes a polytetrafluoroethylene (PTFE) porous membrane.

**5.** The gas-permeable membrane according to claim 1, wherein the gas-permeable membrane is formed of a monolayer polytetrafluoroethylene (PTFE) porous membrane.

**6.** The gas-permeable membrane according to claim 1, wherein the gas-permeable membrane includes a uniaxially stretched membrane.

**7.** The gas-permeable membrane according to claim 1, wherein the gas-permeable membrane has a water entry pressure of 5 kPa or more evaluated by a water resistance test specified in JIS L1092:2009.

**8.** The gas-permeable membrane according to claim 1, wherein the gas-permeable membrane has an air permeability in the thickness direction of 200 seconds/100 mL or less, as expressed by air permeability (Gurley air permeability)

evaluated in accordance with Method B (Gurley method) of air permeability measurement specified in JIS L 1096:2010.

**9.** The gas-permeable membrane according to claim 1, wherein the gas-permeable membrane has a thickness of more than 100 μm.

**10.** A gas-permeable member comprising:

the gas-permeable membrane according to any one of claims 1 to 9; and
a support member for supporting the gas-permeable membrane.

**11.** A light-emitting device comprising;

a housing having an opening;
a light source housed in the housing; and
a gas-permeable membrane fixed to the housing so as to cover the opening, wherein
the gas-permeable membrane is the gas-permeable membrane according to any one of claims 1 to 9.

**12.** The light-emitting device according to claim 11, wherein the gas-permeable membrane is fixed to the housing such that the first principal surface faces inside of the housing.

1
11
12

FIG.1

1
11
12

FIG.2

1
21
12
22

FIG.3

1
21
22
12

FIG.4

1
31
32
12

FIG.5

1
31
32
21
22
12

FIG.6

1
11
2
3
12

FIG.7

4
1
5
B
B

FIG.8A

4
5
1

FIG.8B

41
43
45
42

FIG.9A

41
44
1
42
1
44
43

FIG.9B

**INTERNATIONAL SEARCH REPORT**

International application No. **PCT/JP2024/041195**

**A. CLASSIFICATION OF SUBJECT MATTER**

***C08J 9/40***(2006.01)i; ***B32B 5/32***(2006.01)i; ***C08J 9/00***(2006.01)i; ***F21S 45/30***(2018.01)i; ***F21V 31/03***(2006.01)i; *F21W 102/00*(2018.01)n

FI: C08J9/40 CEW; B32B5/32; C08J9/00 A; F21S45/30; F21V31/03 100; F21W102:00

According to International Patent Classification (IPC) or to both national classification and IPC

**B. FIELDS SEARCHED**

Minimum documentation searched (classification system followed by classification symbols)

C08J9/00-9/42; B32B; F21S45/30; F21V31/03

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-16352 A (NITTO DENKO CORPORATION) 27 January 2011 (2011-01-27) claims, paragraphs [0018], [0021], [0023], [0026], [0027], examples, paragraph [0048], drawings | 1, 4, 6-11 |
| A | | 2, 3, 5, 12 |
| X | JP 2012-526937 A (GORE ENTERPRISE HOLDINGS, INC.) 01 November 2012 (2012-11-01) claims, paragraphs [0018], [0020], [0022], [0027], [0029], [0030], examples, drawings | 1-4, 6-10 |
| A | | 5, 11, 12 |
| X | WO 2022/004885 A1 (NITTO DENKO CORPORATION) 06 January 2022 (2022-01-06) claims, paragraphs [0012]-[0014], [0019], [0026], [0031], [0032], [0038], [0040], [0045], [0047], examples, drawings | 1, 4-8, 10, 11 |
| A | | 2, 3, 9, 12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2025** | **10 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/041195**

**C. DOCUMENTS CONSIDERED TO BE RELEVANT**

| Category* | Citation of document, with indication, where appropriate, of the relevant passages | Relevant to claim No. |
|---|---|---|
| A | JP 2019-530331 A (W. L. GORE & ASSOCIATES GMBH) 17 October 2019 (2019-10-17) entire text | 1-12 |
| A | JP 2011-52180 A (NITTO DENKO CORPORATION) 17 March 2011 (2011-03-17) entire text | 1-12 |
| A | JP 2004-261737 A (NITTO DENKO CORPORATION) 24 September 2004 (2004-09-24) entire text | 1-12 |
| A | US 2022/0088902 A1 (AMOGREENTECH CO., LTD.) 24 March 2022 (2022-03-24) entire text | 1-12 |

Form PCT/ISA/210 (second sheet) (July 2022)

**INTERNATIONAL SEARCH REPORT**
**Information on patent family members**

International application No.
**PCT/JP2024/041195**

| Patent document cited in search report | Publication date (day/month/year) | Patent family member(s) | Publication date (day/month/year) |
|---|---|---|---|
| JP 2011-16352 A | 27 January 2011 | US 2012/0114902 A1<br>claims, examples, drawings<br>WO 2010/143437 A1<br>EP 2441625 A1<br>KR 10-2012-0052226 A<br>CN 102803022 A | |
| JP 2012-526937 A | 01 November 2012 | US 2010/0288321 A1<br>claims, examples, drawings<br>WO 2010/132082 A1<br>EP 2429809 A1<br>CA 2761620 A1<br>CN 102458822 A<br>KR 10-2012-0101287 A | |
| WO 2022/004885 A1 | 06 January 2022 | US 2023/0068958 A1<br>claims, examples, drawings<br>CN 115734980 A<br>KR 10-2023-0034339 A | |
| JP 2019-530331 A | 17 October 2019 | US 2019/0246192 A1<br>WO 2018/049600 A1<br>CN 108605174 A<br>KR 10-2019-0098739 A | |
| JP 2011-52180 A | 17 March 2011 | (Family: none) | |
| JP 2004-261737 A | 24 September 2004 | (Family: none) | |
| US 2022/0088902 A1 | 24 March 2022 | WO 2020/106094 A1<br>KR 10-2020-0060288 A<br>CN 113039068 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003318557 A